Europäisches Patentamt

European Patent Office

Office européen des brevets

(19)

(11) Veröffentlichungsnummer : **0 116 879**
**B1**

(12) # EUROPÄISCHE PATENTSCHRIFT

(45) Veröffentlichungstag der Patentschrift :
27.05.87

(21) Anmeldenummer : 84101048.1

(22) Anmeldetag : 02.02.84

(51) Int. Cl.⁴ : **B 01 F 15/04, G 05 D 11/13,**
**G 05 D 11/02**

(54) Verfahren und Vorrichtung zum Dosieren und Mischen von mehrkomponentigen Medien.

(30) Priorität : 19.02.83 DE 3305890

(43) Veröffentlichungstag der Anmeldung :
29.08.84 Patentblatt 84/35

(45) Bekanntmachung des Hinweises auf die Patenterteilung : 27.05.87 Patentblatt 87/22

(84) Benannte Vertragsstaaten :
AT BE CH DE FR GB IT LI LU NL SE

(56) Entgegenhaltungen :
AT-B- 149 639
CH-A- 622 632
DE-A- 2 046 641
DE-A- 2 526 215
DE-A- 2 644 931
DE-A- 2 650 405
DE-B- 2 831 856

(73) Patentinhaber : Hilger u. Kern GmbH
Käfertaler Strasse 253/255
D-6800 Mannheim 1 (DE)

(72) Erfinder : Blochmann, Horst
Rosenstrasse 3
D-6704 Mutterstadt (DE)

(74) Vertreter : Fischer, Wolf-Dieter, Dipl.-Ing.
Patentanwälte Dipl.-Ing. A.H. Fischer Dipl.-Ing. W.D.
Fischer Kurfürstenstrasse 32
D-6700 Ludwigshafen/Rhein (DE)

EP 0 116 879 B1

Jouve, 18, rue St-Denis, 75001 Paris, France

## Beschreibung

Die Erfindung betrifft ein Verfahren zum Erzeugen von zweikomponentigen Medien durch Dosieren und Mischen der einzelnen Komponenten, die dosiert einem Mischer zugeführt werden.

Bekannt ist ein derartiges Verfahren und auch eine entsprechende Vorrichtung (DE-A-2 650 405), bei dem bzw. bei der zwei Komponenten A und B über Durchflußmengenmesser dosiert einem Statikmischer zugeführt werden. Genauso ist es bekannt, dynamische Mischsysteme zu verwenden. Bei den meisten derartigen mehrkomponentigen Medien kommt es auf ein exaktes Mischungsverhältnis an, wobei Dosierfehler, beispielsweise bedingt auch durch undichte Ventile, zu Fehlern führen. Derartige Fehler können sich beispielsweise bei Lackmischungen besonders nachteilig auswirken, weil die derart behandelten Teile dann als Ausschuß behandelt werden müssen.

Die weiterhin bekannten Mehrkomponenten-Dosiersysteme dosieren die einzelnen Komponenten über Zahnrad-, Schnecken-, Kolben-, Membran- und Kreiselpumpen, wobei diesen Dosierpumpen die Materialien mit Druck über Drucktanks oder Förderpumpen zugeführt werden. Die eigentlichen Dosierpumpen benötigen eigene Antriebe, wobei weiterhin das Mischungsverhältnis über Hebelsysteme oder Potentiometer verstellt werden muß, was mit einem erheblichen Aufwand verbunden ist.

Bekannt ist weiterhin eine Vorrichtung zur Abgabe zweier flüssiger Medien in einem einstellbaren Mischungsverhältnis (CH-A-622 632). Hierbei sind zwei Ventile in verschiedenen Zufuhrleitungen angeordnet und die Ventile werden von einer elektronischen Steuerung angesteuert. In den Leitungen sind weiterhin Durchflußmesser vorgesehen, die während des Dosiervorganges Zählerimpulse an einen Zähler geben. Ist das vorgewählte Dosiervolumen der einzelnen Komponenten erreicht, dann schließen die Ventile. Bei dieser bekannten Dosiervorrichtung handelt es sich um eine zeitlich unabhängige Dosierung von zwei verschiedenen Dosiervolumen, ohne sie zu mischen.

Der Erfindung liegt die Aufgabe zugrunde, ein Verfahren und eine Vorrichtung vorzuschlagen, bei der bei einfacher Einstellmöglichkeit des gebrauchten Mischungsverhältnisses Fehldosierungen vermieden werden.

Diese Aufgabe wird nach dem Verfahren dadurch gelöst, daß die einzelnen Komponenten diskontinuierlich nacheinander und entsprechend dem gebrauchten Mischungsverhältnis durch am Steuergerät vorgegebene Zählimpulse, die einem bestimmten Volumen entsprechen, einer Mischeinheit zum groben Vormischen zugeführt werden und daß der Durchfluß für die erste Komponente erst wieder freigegeben wird, wenn die zweite Komponente des vorher dosierten Medienzyklus gefördert ist, und daß bei Ausfall der Förderung oder bei Leckage der Durchfluß für die Komponenten gesperrt wird.

Eine Vorrichtung zum Durchführen des Verfahrens mit einer Förderpumpe oder einem Drucktank und einer Mengenmeßeinrichtung für jede Komponente und einem daran angeschlossenen Mischer besteht darin, daß der Mengenmeßeinrichtung je Komponente ein von einer elektronischen Steuerung angesteurtes Einlaßventil nachgeschaltet ist, die nacheinander den Durchfluß der Komponenten, entsprechend einem bestimmten Volumen, freigeben oder absperren, wobei die Steuerung bei Ausfall der Förderung oder bei Leckage den Durchfluß beider Komponenten sperrt und daß jeweils die einzelnen Komponenten zu einem Zweikammer-Mischblock geführt sind, dem der Mischer nachgeordnet ist.

Eine vorteilhafte Ausführungsform besteht darin, daß als Mengenmeßeinrichtung ein Durchflußmengenmesser vorgesehen ist.

Vorteilhaft geht man so vor, daß anschließend an dem Mischer eine stufenlos regelbare Zahnradpumpe vorgesehen ist.

Eine weitere vorteilhafte Ausführungsform der Vorrichtung sieht vor, daß der Mischblock eine vergrößerte Bohrung als Mischkammer aufweist, in die zentrisch ein Verteilerrohr mit gleichmäßig verteilten Austrittsbohrungen eingesetzt ist, das mit einem Anschluß für das eine Medium versehen ist, während das andere Medium über einen weiteren Anschluß direkt der Mischkammer zuführbar ist.

Es ist vorteilhaft, daß an den Mischblock ein Spülventil und ein Blasventil angeschlossen sind.

Eine weitere vorteilhafte Ausführungsform besteht darin, daß beim Verarbeiten von abrasiven Materialien den Einlaßventilen Schußpumpen vorgeschaltet sind, die wechselweise auf Saugen und Dosieren arbeiten.

Das erfindungsgemäße Verfahren und die Vorrichtung bringen den wesentlichen Vorteil, daß durch das diskontinuierliche Fördern der einzelnen Komponenten eine exakte Überwachung der einzelnen Komponenten im Rahmen einer elektronischen Steuerung möglich ist, wobei bei Dosierfehlern die Förderung an den Einlaßventilen abgeschaltet wird. Die einzelnen Dosierverhältnisses lassen sich sehr leicht am Steuergerät durch Vorgabe elektrischer Zählimpulse, die einem bestimmten Volumen entsprechen, einstellen. Der besonders ausgebildete Zweikammer-Mischblock ermöglicht ein besonders gutes Vormischen von zwei Komponenten, wobei dann das Fertigmischen in einem nachfolgenden Mischrohr erfolgen kann und damit der Vorteil verbunden ist, daß der eigentliche diskontinuierliche Vorgang beim Dosieren in einen kontinuierlichen Vorgang beim Abgeben des gemischten Mediums, beispielsweise an der Spritzpistole, übergeführt wird.

Die Erfindung wird in der nachfolgenden Beschreibung anhand von in den Zeichnungen dargestellten Ausführungsbeispielen näher erläutert.

Es zeigen,

Figur 1 ein Blockschaltbild einer Vorrichtung gemäß einem ersten Ausführungsbeispiel nach der Erfindung,

Figur 2 ein derartiges Blockschaltbild gemäß einer Abwandlung der in Figur 1 dargestellten Vorrichtung,

Figur 3 ein Blockschaltbild gemäß einer weiteren Ausführungsform und

Figur 4 einen Schnitt durch einen Zwei-Kammer-Mischblock nach der Erfindung.

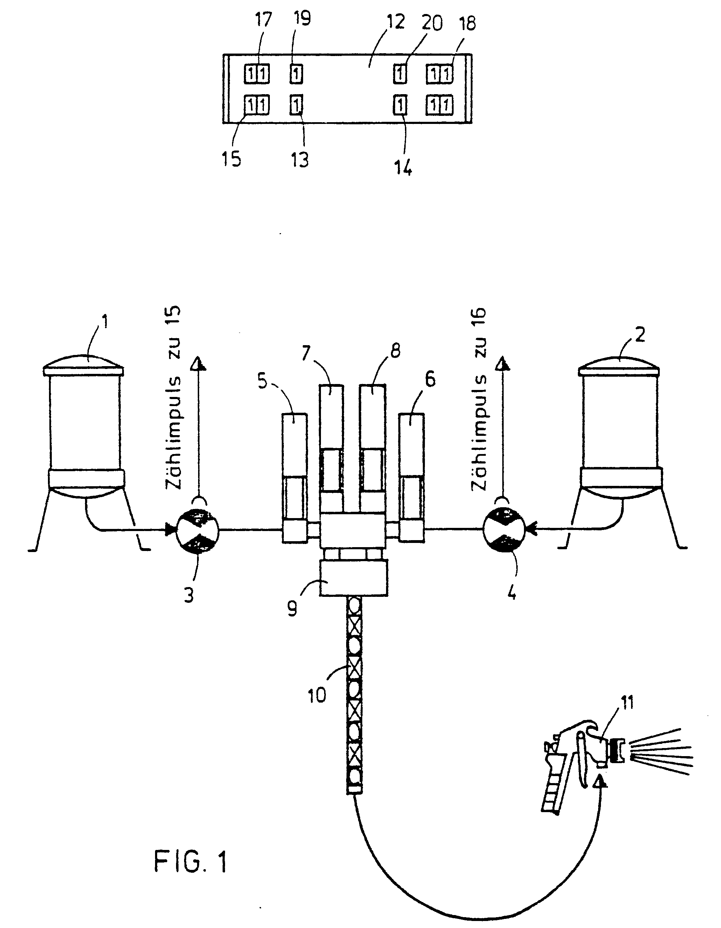

Bei dem in Figur 1 dargestellten Ausführungsbeispiel werden zwei Komponenten zueinander dosiert und gemischt, wobei jede Komponente über eine Förderpumpe oder einen Drucktank 1, 2 einem Durchflußmengenmesser 3 bzw. 4 zugeführt wird. Diesen Durchflußmengenmessern 3, 4 sind Einlaßventile 5 bzw. 6 nachgeordnet, deren Öffnen und Schließen pneumatisch über eine elektronische Steuerung 12 ausgelöst erfolgt. Die elektronische Steuerung ist derart ausgelegt, daß die Portionen der einzelnen Komponenten an dem jeweiligen Durchflußmesser 3, 4 gemessen und in Form von elektrischen Impulsen an die Steuerung 12 abgegeben werden, wobei bei Erreichen des eingestellten Volumens der Materialfluß unterbrochen und sofort der Durchfluß für die zweite Komponente freigegeben wird. Die elektronische Steuereinrichtung 12 besitzt für die Komponenten Einstell- bzw. Vorwahlzähler 13, 14 sowie Zähler 15, 16, die die von den Durchflußmessern 3, 4 abgegebenen Impulse zählen, wobei bei Erreichen der eingestellten Impulszahl zunächst beispielsweise das Ventil 5 schließt und die B-Komponente entsprechend der bei 14 eingestellten Impulszahl zudosiert wird. Weiterhin sind Kontrollzähler 17 bzw. 18 vorgesehen, die bei Fehlern im Dosiersystem ansprechen, wobei die Anlage ausschaltet bzw. Störung meldet.

Die einzelnen Komponenten werden einem Zwei-Kammer-Mischblock 9 zugeführt, wobei dort zunächst eine Kammer mit der ersten Komponente gefüllt wird, in die dann gleichmäßig verteilt die zweite Komponente injiziert wird und hierbei gleichzeitig eine Weiterförderung des Gemisches erfolgt. Dieser Vorgang wird stetig wiederholt. Die endgültige Mischung erfolgt in dem nachgeordneten Mischrohr 10 und das Gemisch wird dann beispielsweise über eine Spritzpistole 11 abgegeben.

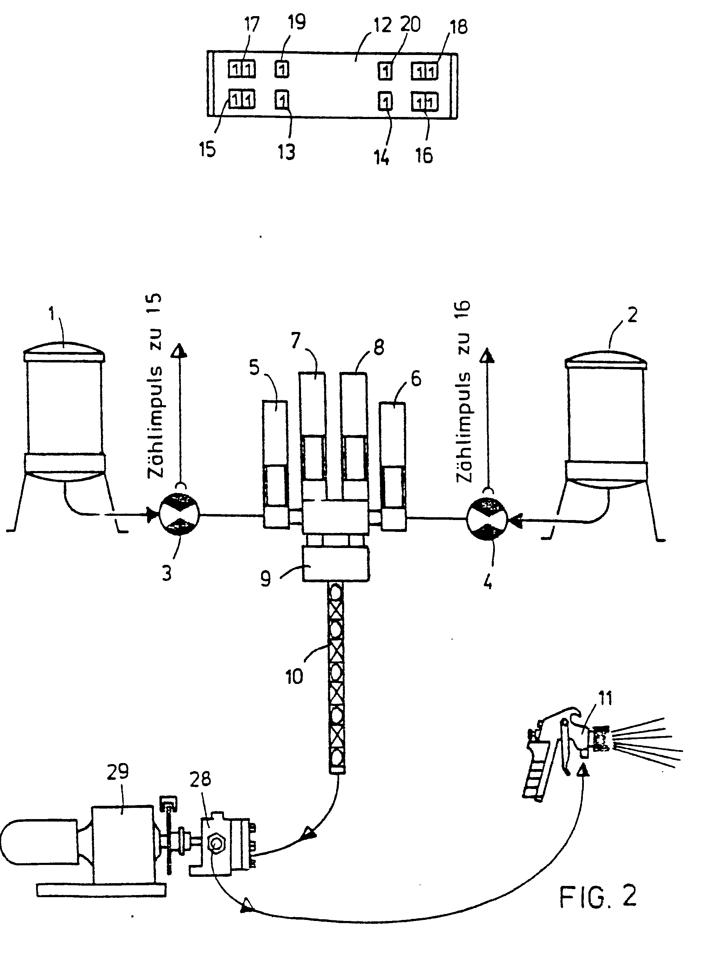

Bei der in Figur 2 dargestellten Ausführungsform der Vorrichtung ist anschließend an das statische Mischrohr 10 eine Zahnradpumpe 28 angeordnet, die über einen Antrieb 29 stufenlos regelbar ist. Dadurch lassen sich konstante und reproduzierbare Ausflußraten einstellen. Die Ausflußrate ist nach dem statischen Mischrohr 10 viskositäts- und druckabhängig.

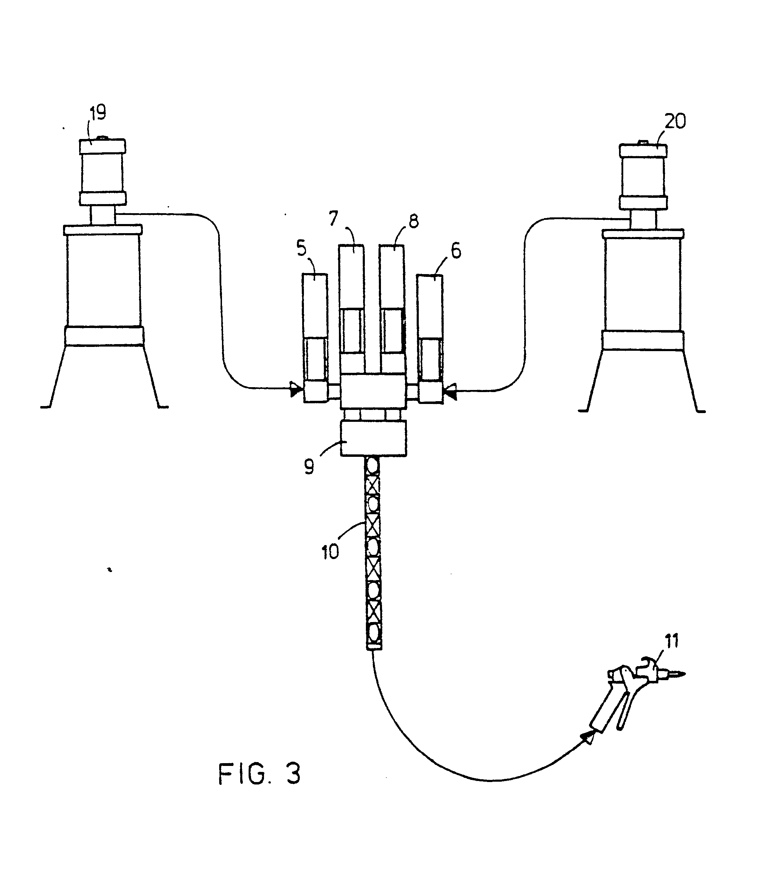

Sollen abrasive Materialien verarbeitet werden, dann lassen sich die Durchflußmengenmesser 3, 4 nicht mehr verwenden, wobei dann gemäß eine abgewandelten Form, wie in Figur 3 dargestellt, Schußpumpen 19 bzw. 20 verwendet werden. Diese Schußpumpen fördern die einzelnen Komponenten ebenfalls diskontinuierlich, indem sie gegenläufig arbeiten, d. h. wenn die eine Pumpe auf Saugen arbeitet, dann arbeitet die andere Pumpe auf Fördern. Durch eine entsprechende bekannte Steuerung wird dieser Bewegungsablauf gesteuert. Weiterhin wird das von den einzelnen Pumpen 19, 20 geförderte Volumen an diesen Pumpen durch eine entsprechende Hubbegrenzung eingestellt.

Bei beiden Systemen gemäß Figur 1 und 2 bzw. 3 sind am Mischblock 9 ein Spülventil 7 und ein Blasventil 8 angeordnet, die über entsprechende Nadelventile bei Bedarf zugeschaltet werden. Auch kann man diesen Reinigungsvorgang automatisch steuern, indem die Ventile über ein Zeitglied gesteuert werden, das auf die Topfzeit des Mediengemisches eingestellt ist.

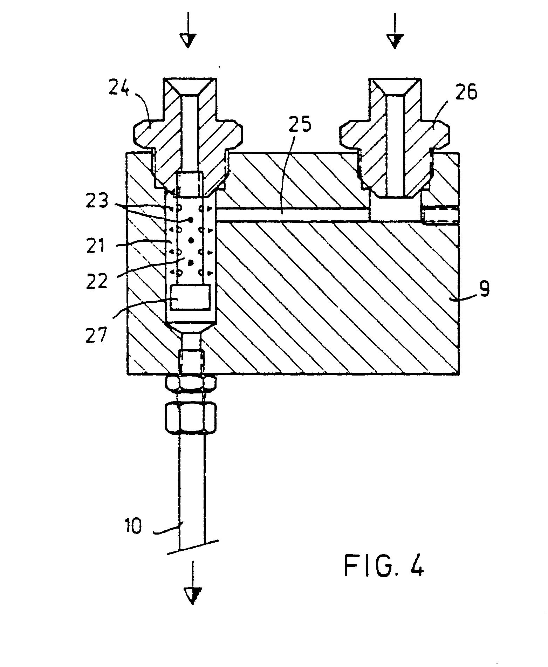

Figur 4 zeigt den eigentlichen Mischblock 9, der eine vergrößerte Mischbohrung bzw. Mischkammer 21 aufweist, in die zentrisch ein Verteilerrohr 22 eingesetzt ist, das gleichmäßig über seine Höhe verteilt Austrittsöffnungen 23 besitzt. Dieses Verteilerrohr 23 ist an einem Anschluß 24 befestigt und dicht in den Block 9 eingesetzt. Weiterhin ist die Kammer 21 über einen Verbindungskanal 25 mit einem weiteren Anschluß 26 verbunden. Am Ende des Verteilerrohres 22 befindet sich eine Art Mischschraube 27.

Die erste Komponente wird über den Anschluß 26 in die Kammer 21 eindosiert und es wird dann die zweite Komponente über den Anschluß 24 und das Mischrohr 22 zugegeben, wobei es über die Austrittsbohrungen 23 gleichmäßig verteilt in die Kammer 21 injiziert wird und hierbei gleichzeitig eine Weiterförderung des Materials zu der nachgeordneten Mischkammer 10 erfolgt. Die Zuführung der ersten Komponente erfolgt am Anfang der Kammer 21.

**Patentansprüche**

1. Verfahren zum Erzeugen von zweikomponentigen Medien durch Dosieren und Mischen der einzelnen Komponenten, die dosiert einem Mischer zugeführt werden, dadurch gekennzeichnet, daß die einzelnen Komponenten diskontinuierlich nacheinander und entsprechend dem gebrauchten Mischungsverhältnis durch am Steuergerät vorgegebene Zählimpulse, die einem bestimmten Volumen entsprechen, einer Mischeinheit zum groben Vormischen zugeführt werden und daß der Durchfluß für die erste Komponente erst wieder freigegeben wird, wenn die zweite Komponente des vorher dosierten Medienzyklus gefördert ist, und daß bei Ausfall der Förderung oder bei Leckage der Durchfluß für die Komponenten gesperrt wird.

2. Vorrichtung zum Durchführen des Verfahrens nach Anspruch 1 mit einer Förderpumpe oder einem Drucktank und einer Mengenmeßeinrichtung für jede Komponente und einem daran angeschlossenen Mischer, dadurch gekennzeichnet, daß der Mengenmeßeinrichtung je Komponente ein von einer elektronischen Steuerung (12) angesteuertes Einlaßventil (5, 6) nachgeschaltet ist, die nacheinander den Durchfluß der Komponenten entsprechend einem bestimmten Volumen, freigeben oder absperren, wobei die Steuerung (12) bei Ausfall der Förderung oder bei Leckage den Durchfluß beider Komponenten sperrt und daß jeweils die einzelnen Komponenten zu einem Zweikammer-Mischblock (9) geführt sind, dem der Mischer (10) nachgeordnet ist.

3. Vorrichtung nach Anspruch 2, dadurch gekennzeichnet, daß als Mengenmeßeinrichtung ein Durchflußmengenmesser (3, 4) vorgesehen ist.

4. Vorrichtung nach Anspruch 2, dadurch gekennzeichnet, daß anschließend an dem Mischer (10) eine stufenlos regelbare Zahnradpumpe (28) vorgesehen ist.

5. Vorrichtung nach Anspruch 2, dadurch gekennzeichnet, daß der Mischblock (9) eine vergrößerte Bohrung (21) als Mischkammer aufweist, in die zentrisch ein Verteilerrohr (22) mit gleichmäßig verteilten Austrittsbohrungen (23) eingesetzt ist, das mit einem Anschluß (24) für die eine Komponente versehen ist, während die andere Komponente über einen weiteren Anschluß (26) direkt der Mischkammer (21) zuführbar ist.

6. Vorrichtung nach Anspruch 2 bis 5, dadurch gekennzeichnet, daß an den Mischblock (9) ein Spülventil (7) und ein Blasventil (8) angeschlossen sind.

7. Vorrichtung nach einem der Ansprüche 2 bis 6, dadurch gekennzeichnet, daß beim Verarbeiten von abrasiven Materialien den Einlaßventilen (5, 6) Schußpumpen (19, 20) vorgeschaltet sind, die wechselweise auf Saugen und Dosieren arbeiten.

## Claims

1. Process for production of 2-constituent media by dosing and mixing the individual constituents which are supplied as a dosage to a mixer, characterised in that the individual constituents are fed discontinuously in turn, by means of a count signal corresponding to a determined volume applied at a control unit, to a mixer unit for coarse mixing, and in that the flow for the first constituent is not activated until the second constituent of the previously dosed media cycle has been delivered, and in that if delivery fails or there is a blockage, the flow of the constituents is shut off.

2. Device for carrying out the process in accordance with Claim 1 with a delivery pump or a pressure tank and a quantity measuring device for each constituent and a mixer connected to it, characterised in that located downstream of the measuring device for each constituent and controlled by an electronic control unit (12) are inlet valves (5, 6) which in turn release or shut off the flow of the constituents corresponding to a determined volume, whereby the control unit (12) shuts off the flow of both constituents if the supply fails or there is a leak and that in each case the individual constituents are supplied to a 2-chamber mixer manifold (9) downstream of which is the mixer (10).

3. Device in accordance with Claim 2, characterised in that a flow meter (3, 4) is provided as a quantity measuring device.

4. Device in accordance with Claim 2, characterised in that an infinitely variable spur gear pump (28) is provided and connected to the mixer (10).

5. Device in accordance with Claim 2, characterised in that the mixer manifold (9) has an enlarged bore as a mixer chamber (21) in which a distributor pipe (22) with evenly distributed outlet orifices (23) is centrally located and provided with a connector (24) for one constituent, whereas the other constituent can be supplied via a further connector (26) directly to the mixer chamber (21).

6. Device in accordance with Claims 2 to 5, characterised in that a flushing valve (7) and relief valve (8) are connected to the mixer manifold (9).

7. Device in accordance with Claims 2 to 6, characterised in that when abrasive materials are being processed, dosing pumps (19, 20) which operate alternately on suction and dosing are fitted before the inlet valves (5, 6).

## Revendications

1. Procédé pour produire des substances à deux composants en dosant et mélangeant les composants individuels qui sont amenés, dosés, à un mélangeur, caractérisé en ce que les composants individuels sont amenés à une unité de mélangeage pour un mélangeage grossier, l'un après l'autre en discontinu et en fonction du rapport de mélange utilisé, à l'aide d'impulsions de comptage prédéterminées sur l'appareil de commande, impulsions qui correspondent à un volume déterminé, et en ce que le passage pour le premier composant n'est à nouveau libéré que lorsque le second composant du cycle de substances précédemment dosées a été transporté, et en ce qu'en cas de défaillance du transport ou en cas de fuite, le passage pour les composants est fermé.

2. Dispositif pour mettre en œuvre le procédé selon la revendication 1 comportant une pompe de circulation ou un réservoir sous pression et un dispositif de mesure de débit pour chaque composant auquel est raccordé un mélangeur, caractérisé en ce qu'à la suite du dispositif de mesure de débit est monté un clapet d'admission par composant (5, 6) commandé par une commande électronique (12), lesquels clapets libèrent ou ferment successivement le passage des composants en fonction d'un volume déterminé, la commande (12) fermant le passage des deux composants en cas de panne du transport ou en cas de fuite, et en ce que les composants individuels sont respectivement conduits à un bloc mélangeur à deux chambres (9) monté à la suite du mélangeur (10).

3. Dispositif selon la revendication 2, caractérisé en ce qu'on prévoit comme dispositif de mesure des quantités un débitmètre (3, 4).

4. Dispositif selon la revendication 2, caractérisé en ce qu'on prévoit, se raccordant au mélangeur (10), une pompe à engrenages (28) à réglage progressif.

5. Dispositif selon la revendication 2, caractérisé en ce que le bloc mélangeur (9) comporte un alésage agrandi (21) en tant que chambre de mélangeage dans laquelle est introduit au centre un tuyau distributeur (22) muni d'orifices de sortie (23) répartis régulièrement, lequel tuyau est muni d'un raccordement (24) pour l'un des composants, tandis que l'autre composant peut être amené directement à la chambre de mélangeage (21) par l'intermédiaire d'un autre raccordement (26).

6. Dispositif selon l'une des revendications 2 à 5, caractérisé en ce qu'au bloc mélangeur (9) sont raccordées une soupape de vidange (7) et une soupape de soufflage (8).

7. Dispositif selon l'une des revendications 2 à 6, caractérisé en ce que, lorsqu'on traite des matériaux abrasifs, on monte avant les soupapes d'admission (5, 6) des pompes d'injection (19, 20) qui travaillent alternativement en aspiration et en dosage.

FIG. 1

17  19  12  20  18

15  13  14  16

Zählimpuls zu 15

Zählimpuls zu 16

1

2

7  8

5  6

3  4

9

10

11

29  28

FIG. 2

FIG. 3

FIG. 4